# EUROPÄISCHE PATENTSCHRIFT

(11) **EP 1 086 845 B1**
(45) Veröffentlichungstag und Bekanntmachung des Hinweises auf die Patenterteilung: **17.08.2005**
(21) Anmeldenummer: 00250319.1
(22) Anmeldetag: 26.09.2000
(51) Int. Cl.: B60L 5/40, B60M 1/34

(54) **Vorrichtung zum Ein-und Ausfahren eines Stromabnehmerwagens in ein bzw aus einem Kunststofflängsprofil einer Schleifleitung**
Device for entering or exiting a current collector trolley into or out of a synthetic longitudinal profile of a contact line
Dispositif pour faire entrer ou sortir un chariot mobile de captation dans ou d'un profil longitudinal synthétique d'une ligne de contact

(30) Priorität: 27.09.1999 DE 19948108
(43) Veröffentlichungstag der Anmeldung: 28.03.2001
(73) Patentinhaber: Demag Cranes & Components GmbH, 58300 Wetter (DE)
(72) Erfinder: Kohlenberg, Thomas, Dipl.-Ing., 59494 Soest (DE); Schulte, Uwe, 58300 Wetter (DE)
(74) Vertreter: Moser, Jörg Michael, Dipl.-Ing.

(56) Entgegenhaltungen:
- EP-A- 0 938 168
- FR-A- 2 329 091
- US-A- 4 416 357

## Beschreibung

Die Erfindung betrifft eine Vorrichtung zum Ein- und Ausfahren eines Stromabnehmerwagens in eine bzw. aus einer Schleifleitung gemäß dem Oberbegriff des Anspruchs 1.

Aus den Firmenprospekten "Sicherheits-Schleifleitungen in Kunststoff" der Paul Vahle GmbH & Co. KG (Katalog Nr.: 4c/D96 und 4a/D91) sind gattungsähnliche Vorrichtungen zum Ein- und Ausfahren eines Stromabnehmerwagens in ein bzw. aus einem Kunststofflängsprofil einer Schleifleitung bekannt, die im Innern in Längsrichtung verlaufende Stromschienen trägt. Zum Ein- und Ausfahren des Stromabnehmerwagens werden Trichter als Führung verwendet, die beispielsweise jeweils mittels einer Muffe mit dem Kunststofflängsprofil fluchtend verbindbar sind, wobei die Muffe das Ende des Kunststofflängsprofils übergreift. Das hintere Ende des Trichters und das gegenüberliegende Ende des Kunststofflängsprofils liegen dabei stirnseitig aneinander an.

Eine weitere Vorrichtung zum Ein -und Ausfahren eines stromab nehmerwagens ist aus der US-A-4 416 357 bekannt.

Nachteilig ist bei dieser Trichter-Lösung, daß die Erfordernisse eines sicheren Berührungsschutzes nicht oder nur mit erhöhtem Aufwand eingehalten werden können. Insbesondere ist der Trichter bei ausreichendem Berührungsschutz nicht kurzbauend ausführbar. Weiter stellt diese Lösung nicht sicher, daß die Strom-Kriechwege ohne mechanisch aufwendige Bearbeitung eine den Sicherheitsvorschriften entsprechende Mindestlänge aufweisen. Nachteilig ist auch, daß sich diese gattungsähnliche Vorrichtung aus vielen Teilen zusammensetzt, die sich nur mit einem erheblichen Aufwand montieren lassen.

Die Aufgabe der Erfindung besteht darin, eine Vorrichtung zum Ein- und Ausfahren von Stromabnehmerwagen vorzuschlagen, bei der die o. g. Nachteile vermieden werden.

Die Aufgabe wird durch die im Anspruch 1 angegebenen Merkmale gelöst. Die Merkmale der Unteransprüche beschreiben vorteilhafte Ausgestaltungen der Vorrichtung.

Die Lösung sieht vor, daß das der Innenkontur des Kunststofflängsprofils angepaßte hintere Ende des Trichters formschlüssig in das Kunststofflängsprofil einsteckbar ist und daß die das Kunststofflängsprofil und den Trichter verbindende Muffe das Kunststofflängsprofil formschlüssig umgreift. Das Hineinreichen des Trichters in das Kunststofflängsprofil ermöglicht es, die Vorrichtung zum Ein- und Ausfahren kurzbauend auszuführen, gleichzeitig hinreichend lange Kriechwege sicherzustellen und außerdem für einen ausreichenden Berührungsschutz zu sorgen. Mittels der das Kunststofflängsprofil und den Trichter verbindenden Muffe, die das Kunststofflängsprofil formschlüssig umgreift und das Ende des Kunststofflängsprofils im montierten Zustand übergreift, erhält man auf einfache Weise ein Ineinandergreifen des Trichters, der Muffe und des Kunststofflängsprofils, d. h. ein "Überlappen" von Kunststoffteilen. Die auf diese Weise ermöglichte kurze Baulänge der Vorrichtung gestattet eine vereinfachte Ausführung der Werkzeuge zum Kunststoffspritzgießen dieser Kunststoffteile. Ferner muß bei dieser Lösung das Ende des Kunststofflängsprofils nicht bearbeitet werden.

Um eine Verbesserung der Einsteckbarkeit zu erreichen, ist das hintere Ende des Trichters mindestens teilweise verjüngt auszubilden.

Die Verbindung von Trichter und Muffe ist schnell und sicher herstellbar, wenn der Trichter mit der Muffe verrastbar ist.

Bei einer einfachen Ausbildung der Befestigung der Vorrichtung am Kunststofflängsprofil wird die Muffe mittels Schrauben an diesem angeschraubt.

Um den Trichter kurz halten zu können und diesen trotzdem hinreichend weit in das Kunststofflängsprofil hinein zu erstrecken, wird vorgeschlagen, daß am hinteren Ende des Trichters in das Kunststofflängsprofil hineinragende elektrisch isolierende jeweils mit einer Stromschiene verbindbare Distanzelemente angeordnet sind.

Unterschiedliche Distanzelementlängen sind erzielbar, wenn diese formschlüssig miteinander verbindbar sind. Auf diese Weise ist es möglich, mit einer einzigen Distanzelementlänge unterschiedliche Tiefen für das Hineinreichen des Trichters in das Kunststofflängsprofil sicherzustellen.

Konstruktiv einfach ist es, wenn die Distanzelemente mit dem hinteren Ende des Trichters formschlüssig verbindbar sind.

Die Montage vereinfacht sich, wenn die Distanzelemente wie die. Stromschienen in für die Stromschienen im Kunststofflängsprofil vorgesehene Hohlräume einschiebbar sind. Hierdurch ist es möglich, die vor der Montage aus dem Kunststofflängsprofil herausragenden Stromschienen mit den Distanzelementen und diese mit dem Trichter zu verbinden und nach dieser Vormontage die Distanzelemente zusammen mit den Stromschienen und dem Trichter in das Kunststofflängsprofil einzuschieben.

Um eine Abriebspur der Schleifkohlen des Stromabnehmerwagens zu vermeiden, wird vorgeschlagen, daß die Distanzelemente jeweils auf der dem Stromabnehmerwagen zugewandten Seite quer zu ihrer Längsrichtung mindestens eine vertikale Nut aufweisen. Die Nut verhindert auf eine einfache Weise eine durchgehende Abriebspur, so daß die Isolationseigenschaften der Distanzelemente auch nach längerem Betrieb der Schleifleitung sichergestellt sind.

Ein Ausführungsbeispiel der Erfindung ist in der Zeichnung dargestellt und wird nachfolgend näher beschrieben. Es zeigen:
- Fig. 1: eine perspektivische Darstellung der Vorrichtung mit Trichter, Muffe und Kunststofflängsprofil,
- Fig. 2: die Darstellung gemäß Fig. 1 mit teilweise aufgeschnittener Muffe,
- Fig. 3: den Trichter mit teilweise aufgeschnittener Muffe sowie am Trichter angeordneten Distanzelementen und
- Fig. 4: eine Darstellung des Trichters mit Distanzelementen gemäß Fig. 3 aus einer anderen Blickrichtung, jedoch ohne Muffe.

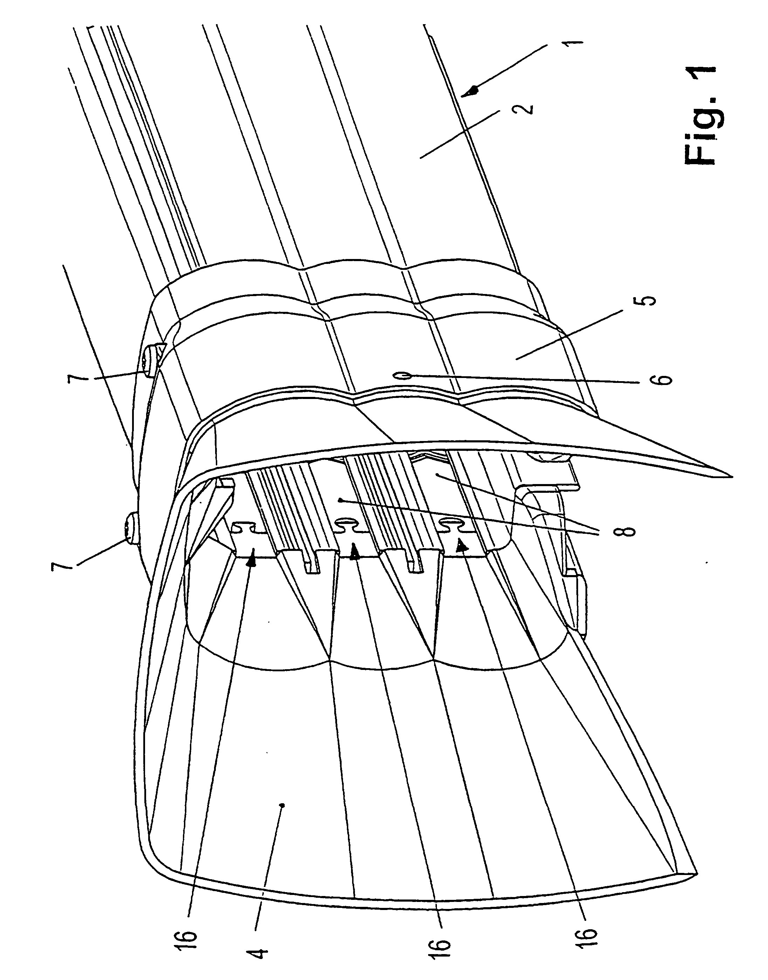

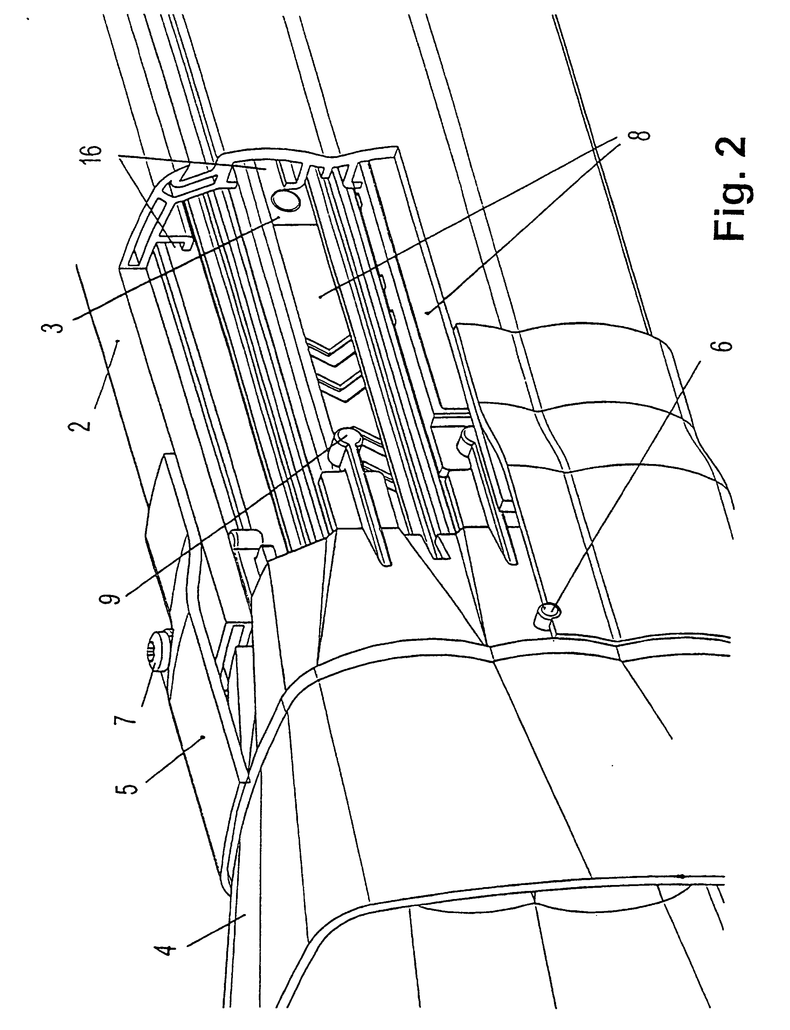

Fig. 1 zeigt eine Vorrichtung zum Ein- und Ausfahren eines Stromabnehmerwagens (nicht gezeigt) in eine bzw. aus einer Schleifleitung 1. Die Schleifleitung 1 besteht aus einem Kunststofflängsprofil 2, in dem Stromschienen 3 (s. Fig. 2) angeordnet sind. Am Ende der Schleifleitung 1 bzw. des Kunststofflängsprofils 2 befindet sich ein Trichter 4, der mittels einer Muffe 5 am Kunststofflängsprofil 2 befestigt ist. Hierzu ist der Trichter 4 mit der Muffe 5 mittels Rastelementen 6 formschlüssig verbindbar, wobei die Muffe 5 wiederum mittels zweier Schrauben 7 am Kunststofflängsprofil 2 angeschraubt ist. Die Schrauben 7 fixieren den Trichter 4 am Kunststofflängsprofil 2; weitere Befestigungselemente sind nicht vorgesehen und praktisch auch nicht erforderlich.

Die Muffe 5 umgreift das Kunststofflängsprofil 2 formschlüssig und ist auf diesem vor dem Verbinden von Kunststofflängsprofil 2 und Trichter 4 frei verschiebbar.

Fig. 2 zeigt das teilweise aufgeschnittene Schleifleitungsende mit dem Trichter 4 und der Muffe 5. So ist aus Fig. 2 erkennbar, daß der Trichter 4 mit seinem dem Kunststofflängsprofil 2 zugewandten hinteren Ende in das Kunststofflängsprofil 2 hineinragt; dieses hintere Ende des Trichters 4 ist an die Innenkontur des Kunststofflängsprofils 2 angepaßt und formschlüssig in das Kunststofflängsprofil 2 einsteckbar. Zur Vereinfachung des Einsteckvorgangs ist das hintere Ende teilweise verjüngt ausgebildet.

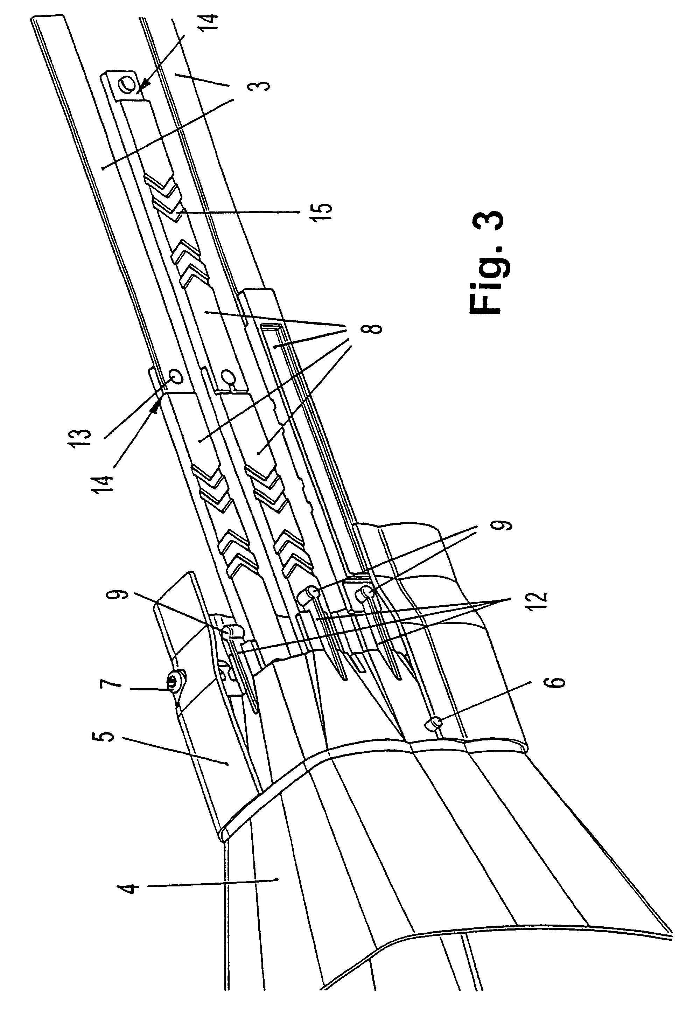

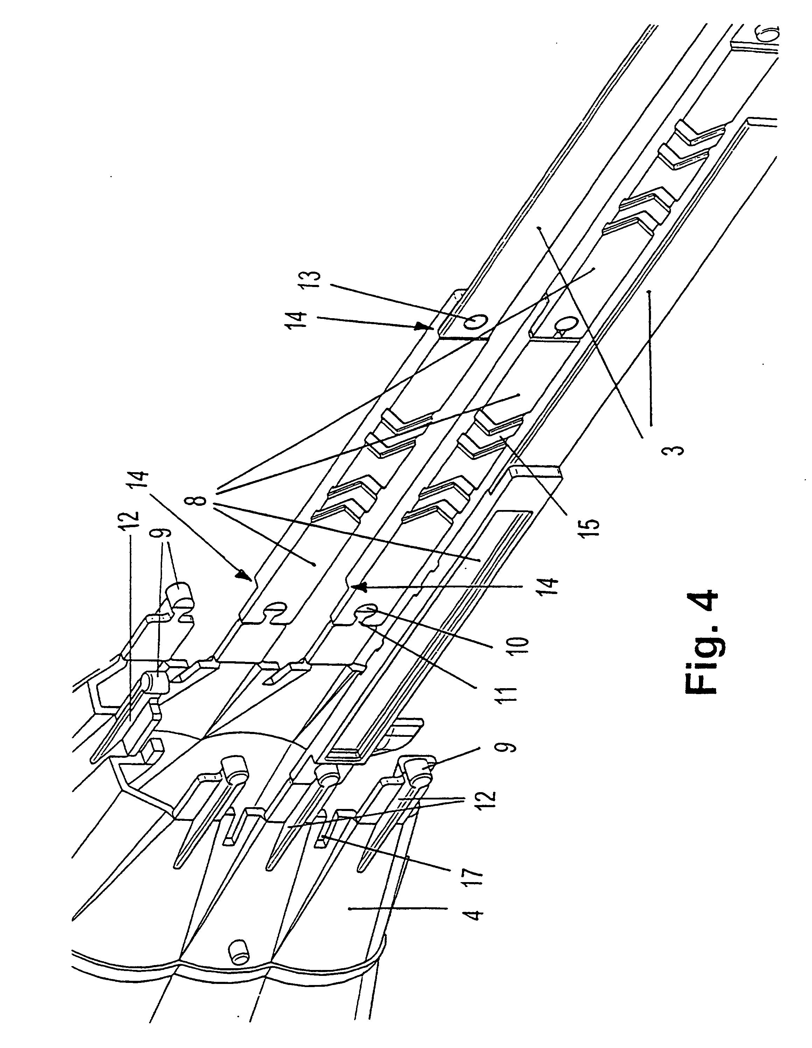

Fig. 3 zeigt den Trichter 4 mit der aufgeschnittenen Muffe 5 sowie am hinteren Ende des Trichters 4 angeordnete Distanzelemente 8. Diese Anordnung ist in Fig. 4 noch einmal aus einer anderen Blickrichtung ohne Muffe 5 gezeigt. Aus den beiden Figuren 3 und 4 geht hervor, daß am hinteren Ende des Trichters 4 zylindrische Vorsprünge 9 vorgesehen sind, die in Durchgangsbohrungen 10, welche sich an den Enden der Distanzelemente 8 befinden, unter Bildung eines Formschlusses einsteckbar sind. Aus Formschlußgründen sind die Distanzelemente 8 zusätzlich mit einem Längsschlitz 11 versehen, in den ein in Längsrichtung verlaufender, am Trichter 4 ausgebildeter Steg 12 einsetzbar ist, der unmittelbar am Vorsprung 9 beginnt und sich in Längsrichtung des Kunststofflängsprofils 2 zur Trichteröffnung hin erstreckt. Durch die Stege 12 wird die drehfeste formschlüssige Verbindung sichergestellt.

Fig. 3 und Fig. 4 zeigen drei am Trichter befestigte Distanzelemente 8, die mit ihrem anderen Ende entweder mit einem weiteren Distanzelement 8 oder aber mit einer Stromschiene 3 formschlüssig verbunden sind. Der Formschluß erfolgt wieder durch ein fliegend am Distanzstückende ausgebildetes Zylinderelement 13, das in eine entsprechende Bohrung am zugehörigen Ende der Stromschiene 3 formschlüssig einsteckbar ist. Die Distanzelemente 8 weisen hierzu am Ende eine Stufe 14 auf, die im montierten Zustand ein Verschwenken des Distanzelements 8 gegenüber der Stromschiene 3 verhindert.

Damit sich keine durchgehende Abriebspur auf den Distanzelementen 8 bedingt durch die darüberschleifenden Schleifkohlen des Stromabnehmerwagens bilden kann, ist mindestens eine Nut 15 an den Distanzelementen 8 auf der Seite vorgesehen, die montiert nach innen ins Kunststofflängsprofil 2 gerichtet ist.

Die in der Figur 4 dargestellte Anordnung ist in das Kunststofflängsprofil 2 einschiebbar, bis das hintere Ende des Trichters 4 formschlüssig im Kunststofflängsprofil 2 steckt. Als Führung für die Distanzelemente 8 dienen hierbei die für die Stromschienen 3 vorgesehenen Hohlräume 16, in die die Distanzelemente 8 einschiebbar sind.

Die Montage vereinfacht sich, wenn die Distanzelemente 8 als auch die Stromschienen 3 in für die Stromschienen 3 im Kunststofflängsprofil 2 vorgesehene Hohlräume 16 einschiebbar sind.

Zur Vergrößerung der Kriechwege sind am hinteren Ende des Trichters 4 zusätzliche Aussparungen 17 vorgesehen.

Zur Montage werden die Stromschienen 3 soweit aus dem Kunststofflängsprofil 2 herausgeschoben, daß diese aus dem Kunststofflängsprofil 2 herausragen, um sie mit den Distanzelementen 8 und mit dem Trichter 4 verbinden zu können. Nach dieser Vormontage werden die Distanzelemente zusammen mit den Stromschienen 3 und dem Trichter 4 einfach in das Kunststofflängsprofil 2 eingeschoben und mittels der Muffe 5 mit den Schrauben 7 am Kunststofflängsprofil 2 befestigt.

Selbstverständlich können die Stromschienen 3 auch direkt, also ohne Distanzelemente 8 am Trichter 4 befestigt werden.

In jedem Falle läßt sich ohne großen Aufwand sicherstellen, daß auch bei unsymmetrischem Betrieb der Vorrichtung der Nulleiter stets zuerst kontaktiert wird. Mit den beschriebenen Vorrichtungselementen ist es generell leicht, eine spiegelsymmetrische Trichterlösung, d.h. eine rechte und linke Ausführung für die einander gegenüberliegenden Trichter 4 (Einfahr- und Ausfahrtrichter) zu realisieren.

### Bezugszeichenliste:

- 1: Schleifleitung
- 2: Kunststofflängsprofil
- 3: Stromschiene
- 4: Trichter
- 5: Muffe
- 6: Rastelement
- 7: Schraube
- 8: Distanzelement
- 9: Vorsprung
- 10: Durchgangsbohrung
- 11: Längsschlitz
- 12: Steg
- 13: Zylinderelement
- 14: Stufe
- 15: Nut
- 16: Hohlraum
- 17: Aussparung

## Patentansprüche

1. Vorrichtung zum Ein- und Ausfahren eines Stromabnehmerwagens in ein bzw. aus einem Kunststofflängsprofil einer Stromschienen aufweisenden Schleifleitung,
mit einem an einem Ende der Schleifleitung angeordneten Trichter, wobei das Kunststofflängsprofil und der Trichter mittels einer das Kunststofflängsprofil umgreifenden Muffe verbindbar sind, die vor dem Verbinden auf dem Kunststofflängsprofil frei verschiebbar ist und im verbundenen Zustand das Ende des Kunststofflängsprofils übergreift
**dadurch gekennzeichnet,**
**daß** das der Innenkontur des Kunststofflängsprofils (2) angepaßte hintere Ende des Trichters (4) formschlüssig in das Kunststofflängsprofil (2) einsteckbar ist und
**daß** die das Kunststofflängsprofil (2) und den Trichter (4) verbindende Muffe (4) das Kunststofflängsprofil (2) formschlüssig umgreift.

2. Vorrichtung nach Anspruch 1,
**dadurch gekennzeichnet,**
**daß** das hintere Ende des Trichters (4) mindestens teilweise verjüngt ausgebildet ist.

3. Vorrichtung nach einem der Ansprüche 1 oder 2,
**dadurch gekennzeichnet,**
**daß** der Trichter (4) mit der Muffe (5) verrastbar ist.

4. Vorrichtung nach einem der Ansprüche 1 bis 3,
**dadurch gekennzeichnet,**
**daß** die Muffe (5) mittels Schrauben (7) am Kunststofflängsprofil (2) befestigbar ist.

5. Vorrichtung nach einem der Ansprüche 1 bis 4,
**dadurch gekennzeichnet,**
**daß** am hinteren Ende des Trichters (4) in das Kunststofflängsprofil (2) hineinragende elektrisch isolierende, jeweils mit einer Stromschiene (3) verbindbare Distanzelemente (8) angeordnet sind.

6. Vorrichtung nach Anspruch 5,
**dadurch gekennzeichnet,**
**daß** jeweils zwei Distanzelemente (8) miteinander verbindbar sind.

7. Vorrichtung nach einem der Ansprüche 5 oder 6,
**dadurch gekennzeichnet,**
**daß** die Distanzelemente (8) mit dem hinteren Ende des Trichters (4) formschlüssig verbindbar sind.

8. Vorrichtung nach 5 bis 7,
**dadurch gekennzeichnet,**
**daß** die Distanzelemente (8) in für die Stromschienen (3) im Kunststofflängsprofil (2) vorgesehene Hohlräume (16) einschiebbar sind.

9. Vorrichtung nach 5 bis 8,
**dadurch gekennzeichnet,**
**daß** die Distanzelemente (8) auf der nach innengerichteten Seite quer zur Längsrichtung mindestens eine Nut (15) aufweisen.

## Claims

1. Device for moving a current collector vehicle into or out of an elongate plastics profile of a current collector line having current conductor rails, with a funnel disposed at one end of the current conductor line, wherein the elongate plastics profile and the funnel can be connected by means of a sleeve which surrounds the elongate plastics profile and which is freely displaceable before connection on the elongate plastics profile and which in the connected state engages over the end of the elongate plastics profile, **characterised in that** the rear end of the funnel (4) adapted to the internal contour of the elongate plastics profile (2) can be fitted into the elongate plastics profile (2) so as to interlock and that the sleeve (4) connecting the elongate plastics profile (2) and the funnel (4) enages around the elongate plastics profile (2) as to interlock.

2. Device as claimed in Claim 1, **characterised in that** the rear end of the funnel (4) is constructed so that it is at least partially tapered.

3. Device as claimed in any one of Claims 1 or 2, **characterised in that** the funnel (4) can be latched to the sleeve (5).

4. Device as claimed in any one of Claims 1 to 3, **characterised in that** the sleeve (5) can be fixed to the elongate plastics profile (2) by means of screws (7).

5. Device as claimed in any one of Claims 1 to 4, **characterised in that** electrically insulating distance pieces (8) which project into the elongate plastics profile (2) are disposed at the rear end of the funnel (4) and can in each case be connected to a current conductor rail (3).

6. Device as claimed in claim 5, **characterised in that** in each case two distance pieces (8) can be connected to one another.

7. Device as claimed in any one of Claims 5 or 6, **characterised in that** the distance pieces (8) can be connected to the rear end of the funnel (4) by means of interlocking.

8. Device as claimed in Claims 5 to 7, **characterised in that** the distance pieces (8) can be pushed into the cavities (16) provided for the current conductor rails (3) in the elongate plastics profile (2).

9. Device as claimed in Claims 5 to 8, **characterised in that** the distance pieces (8) have at least one groove (15) on the inwardly directed side extending transversely to the longitudinal direction.

## Revendications

1. Dispositif d'introduction et de sortie d'un chariot récepteur de courant par rapport à un profilé longitudinal en matière plastique d'une ligne de contact comportant des barres conductrices, lequel dispositif comporte
un cône placé à une extrémité de la ligne de contact, le profilé longitudinal en matière plastique et le cône pouvant être raccordés au moyen d'un manchon qui enveloppe le profilé longitudinal en matière plastique, qui est apte à se déplacer librement sur le profilé longitudinal en matière plastique avant d'effectuer le raccordement et qui s'engage par-dessus l'extrémité du profilé longitudinal en matière plastique une fois le raccordement effectué,
**caractérisé en ce que**
l'extrémité arrière du cône, qui est adaptée au contour intérieur du profilé longitudinal en matière plastique (2), peut être insérée par complémentarité de forme dans le profilé longitudinal en matière plastique (2) et
le manchon (4), raccordant le profilé longitudinal en matière plastique (2) et le cône (4), entoure par complémentarité de forme le profilé longitudinal en matière plastique (2).

2. Dispositif selon la revendication 1, **caractérisé en ce que** l'extrémité arrière du cône (4) est conformée de manière à s'amincir au moins partiellement.

3. Dispositif selon l'une des revendications 1 ou 2, **caractérisé en ce que** le cône (4) peut s'encliqueter avec le manchon (5).

4. Dispositif selon l'une des revendications 1 à 3, **caractérisé en ce que** le manchon (5) peut être fixé au profilé longitudinal en matière plastique (2) au moyen de vis (7).

5. Dispositif selon;l'une des revendications 1 à 4, **caractérisé en ce que** des éléments d'écartement (8) électriquement isolants, qui font saillie dans le profilé longitudinal en matière plastique (2) et qui peuvent chacun être raccordés à une barre conductrice (3), sont placés à l'extrémité arrière du cône (4).

6. Dispositif selon la revendication 5, **caractérisé en ce que** deux éléments d'écartement (8) peuvent à chaque fois être reliés l'un à l'autre.

7. Dispositif selon l'une des revendications 5 ou 6, **caractérisé en ce que** les éléments d'écartement (8) peuvent être raccordés par complémentarité de forme à l'extrémité arrière du cône (4).

8. Dispositif selon les revendications 5 à 7, **caractérisé en ce que** les éléments d'écartement (8) peuvent être insérés dans des espaces (16) destinés aux barres conductrices (3) dans le profilé longitudinal en matière plastique (2).

9. Dispositif selon les revendications 5 à 8, **caractérisé en ce que** les éléments d'écartement (8) comportent, du côté dirigé vers l'intérieur et transversalement à la direction longitudinale, au moins une gorge (15).
